# EUROPÄISCHE PATENTSCHRIFT

(11) **EP 1 645 461 B1**
(45) Veröffentlichungstag und Bekanntmachung des Hinweises auf die Patenterteilung: **11.07.2007**
(21) Anmeldenummer: 05021819.7
(22) Anmeldetag: 06.10.2005
(51) Int. Cl.: B60N 2/70, B60N 2/72, A47C 7/30

(54) **Sitz für ein Fahrzeug**
Seat for a vehicle.
Siège pour un véhicule.

(30) Priorität: 07.10.2004 DE 102004048787
(43) Veröffentlichungstag der Anmeldung: 12.04.2006
(73) Patentinhaber: Bayerische Motoren Werke Aktiengesellschaft, 80809 München (DE)
(72) Erfinder: Bekemeier, Klaus, 84034 Landshut (DE)

(56) Entgegenhaltungen:
- DE-A1- 19 927 886
- DE-C1- 10 041 910
- FR-A- 2 837 436
- US-A- 3 273 877
- US-A- 4 736 932

## Beschreibung

Die Erfindung betrifft einen Sitz für ein Fahrzeug gemäß dem Oberbegriff des Anspruchs 1.

Aus der DE 199 27 886 A1 ist bereits ein Fahrzeugsitz mit einer Rückenlehne und mit einem Sitzteil bekannt. Das Sitzteil weist ein Sitzgestell auf, auf dem ein Polsterteil angeordnet ist. An dem Sitzgestell sind zwei übereinander angeordnete Federschichten befestigt. Die Federschichten sind Bestandteile des Sitzpolsters. Die obere Federschicht ist über die Enden ihrer Federn fest mit dem Sitzgestell verbunden. Die hinteren Enden der die untere Federschicht bildenden Federn sind fest am Sitzrahmen befestigt. Die vorderen Enden der die untere Federschicht bildenden Federn sind auf einer Querwelle aufgewickelt, die am Sitzgestell drehbar gelagert ist. Die Querwelle ist mittels eines Antriebs verdrehbar. Durch die Veränderungen der Länge der unteren Federschicht ist die Spannung der unteren Federschicht einstellbar.

Aus der US-A-4,736,932 ist ein Fahrzeugsitz mit einer Rückenlehne und mit einem Sitzteil bekannt. Das Sitzteil weist ein Sitzgestell auf, auf dem ein Polsterteil angeordnet ist. In dem Polsterteil sind in Querrichtung sich erstreckende rohrförmige Federelemente hintereinander angeordnet. Die rohrförmigen Federelemente weisen ein äußeres, federndes Rohr auf, in dessen Hohlraum ein inneres, federndes Rohr mit einem kleineren Durchmesser angeordnet ist. Zwischen der Außenfläche des inneren, federnden Rohres und der Innenfläche des äußeren, federnden Rohres sind zur Oberseite des Polsterteils hin elastische Schaumstoffteile angeordnet.

Aufgabe der Erfindung ist es, einen Sitz für ein Fahrzeug zu schaffen, bei dem die Härte eines Sitzteiles in einfacher Weise einstellbar ist.

Diese Aufgabe wird durch die Merkmale des Anspruchs 1 gelöst.

Bei dem erfindungsgemäßen Sitz sind zwei Schaumstoff-Polsterschichten oder zwei Schaumteile und zwei Federschichten vorgesehen, wobei auf eine untere, nicht verstellbare Federschicht eine untere Schaumstoff-Potsterschicht angeordnet ist, die von der oberen Schaumstoff-Polsterschicht durch eine verstellbare, obere Federschicht beabstandet ist. Durch die verstellbare, obere Federschicht kann die Federwirkung der unteren, nicht verstellbaren Federschicht und der darauf angeordneten unteren Schaumstoff-Polsterschicht dazugeschaltet oder ausgeschaltet werden. Dadurch ergibt sich vorteilhafterweise ein relativ großer Einstellbereich für die Sitzhärte.

In einer vorteilhaften Ausführungsform weist die untere Federschicht einen in der Seitenansicht konkaven Verlauf auf. Die Form der unteren Federschicht zugewandten Oberfläche des unteren Schaumteils ist dem konkaven Verlauf der unteren Federschicht angepasst ist. Die dazu gegenüberliegende Oberfläche des unteren Schaumteils ist eben und entspricht dem Verlauf der oberhalb des Schaumteils angeordneten, oberen, verstellbaren Federschicht.

In einer vorteilhaften Ausführungsform erfolgt die Verstellung der oberen Federschicht dadurch, dass beispielsweise ein hinteres Ende der oberen Federschicht an einem hinteren Ende des Sitzgestelles fest angeordnet ist, während ein vorderes Ende der oberen Federschicht an einer verdrehbaren Welle befestigt ist. In Abhängigkeit von der Drehrichtung wird durch das Verdrehen der Welle die obere Federschicht gespannt oder entspannt und dadurch ist die Härte der oberen Federschicht stufenlos einstellbar.

In einer vorteilhaften Ausführungsform ist die obere Federschicht ein elastisches Gewebe, dessen Fläche sich zumindest zwischen einem hinteren Ende des Sitzgestelles und einem vorderen Bereich des Sitzteiles erstreckt, in dem eine Auflage und Eindrückung des Sitzteiles durch einen Sitzbenutzer erfolgt.

Vorteilhafterweise ist das untere, zwischen den beiden Federschichten befindliche Schaumteil härter als das obere Schaumteil ausgebildet. Das jeweilige Schaumteil kann ein Schnitt- oder ein Formschaumteil sein.

Die Verstellung der drehbaren Welle kann über einen manuell betätigbaren Antrieb und/oder über einen elektrischen und/oder pneumatischen und/oder hydraulischen Antrieb erfolgen.

In einer vorteilhaften Ausführungsform weist zumindest der Querschnitt des unteren Schaumteils in Höhe der höchsten Belastung bei der Benutzung eine konkave Verdickung auf.

Vorteilhafterweise nimmt in einer Ausführungsform nur das obere Schaumteil bei einer maximalen Verspannung der oberen Federschicht eine Belastung durch eine Person oder dergleichen auf.

In einer vorteilhaften Ausführungsform trägt bei einer minimalen Spannung der oberen Federschicht das obere Schaumteil, das untere Schaumteil und die untere Federschicht vollständig zur Einstellung der Sitzhärte bei.

Über die obere Federschicht sind vorteilhafterweise unterschiedliche Sitzhärten des Sitzteiles zwischen einer maximalen Härte und einer minimalen Härte einstellbar.

Eine Ausführungsform der Erfindung wird nachstehend anhand der Zeichnungen beispielhalber beschrieben. Dabei zeigen:
- Fig. 1: eine perspektivische Ansicht eines in Längsrichtung geschnittenen Sitzteiles mit einer harten Einstellung der Sitzhärte,
- Fig. 2: einen Längsschnitt des in der Fig. 1 gezeigten Sitzteils mit einer weichen Einstellung der Sitzhärte und
- Fig. 3: ein Diagramm, bei dem bei einer Ausführungsform eines Sitzteils der Bereich der Einstellbarkeit der Sitzhärte in Abhängigkeit von einer Eindruckkraft und einem Eindruckweg dargestellt ist.

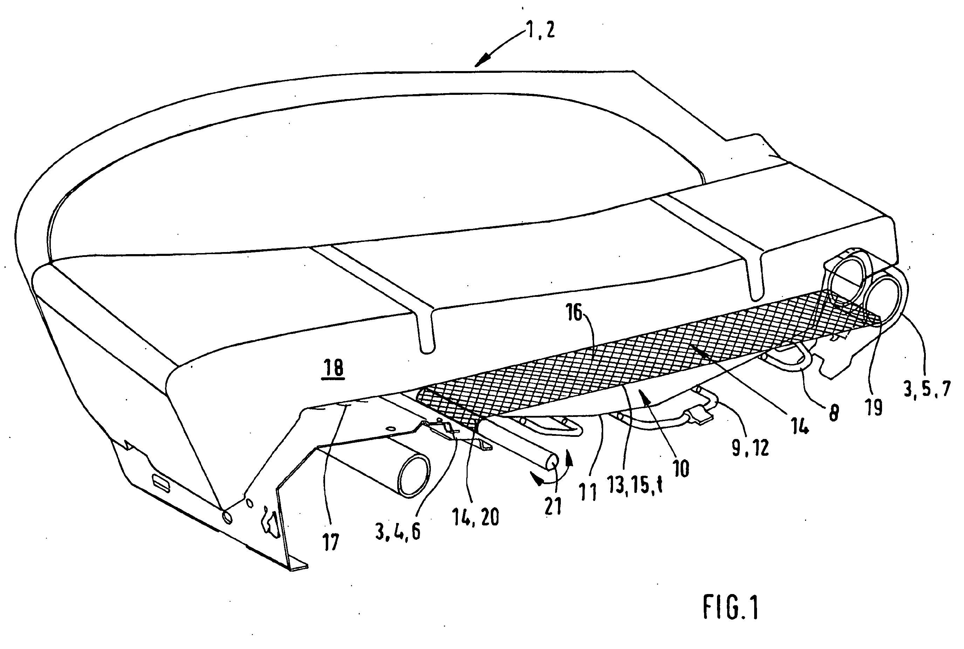

Die Fig. 1 zeigt ein Sitzteil 2 eines nicht weiter dargestellten Sitzes 1, der beispielsweise in einem Kraftfahrzeug als Einzelsitz verwendbar ist. Das Sitzteil 2 weist ein Sitzgestell 3 mit einem vorderen und hinteren Querelement 4 und 5 auf. An dem vorderen und hinteren Querelement 4, 5 bzw. einem unteren Bereich 3a des Sitzgestells 3 ist ein vorderes und hinteres Ende 6, 7 einer unteren, nicht verstellbaren Federschicht 8 befestigt.

Die Federschicht 8 besteht in der gezeigten Ausführungsform aus mäanderförmig verlaufenden Formdrahtfedern 9. Die Federschicht 8 ist in der in der Fig. 1 dargestellten Ansicht in (Fahrzeug-)Querrichtung mit einer konkav nach unten verlaufenden Auswölbung versehen. Auf der Federschicht 8 ist ein unteres Schaumteil 10 angeordnet, dessen in Richtung zur Federschicht 8 zeigende Außenfläche 11 der Form der Oberfläche 12 der Federschicht 8 entsprechend konvex ausgebildet ist.

Auf einer dazu gegenüberliegenden ebenen Oberfläche 13 des unteren Schaumteils 10 ist eine obere, verstellbare Federschicht 14 angeordnet. Die obere, verstellbare Federschicht 14 ist in der gezeigten Ausführungsform ein elastisch spannbares Gewebe. Die Federschicht 14 liegt mit ihrer Unterseite 15 auf der Oberfläche 13 des unteren Schaumteils 10 auf oder ist parallel zu der Oberfläche 13 des unteren Schaumteils 10 um einen Betrag t beabstandet. Der Abstand t kann beispielsweise bei t = 5 bis 15 mm betragen. Oberhalb einer Oberseite 16 der oberen, verstellbaren Federschicht 14 befindet sich eine Unterseite 17 eines weiteren Schaumteiles 18.

In der gezeigten Ausführungsform ist ein hinteres Ende 19 der oberen Federschicht 14 an dem hinteren Querelement 5 des Sitzgestells 3 befestigt. Ein vorderes Ende 20 der Federschicht 14 ist an einer drehbaren Welle 21 angeordnet. Durch die Drehung der Welle 21 ist die Spannung oder Härte der Federschicht 14 veränderbar. In der Fig. 1 ist die obere, verstellbare Federschicht 14 maximal gespannt, so dass nur das Schaumteil 18 bei der Belastung des Sitzteiles 2 durch eine Person 22 eingedrückt wird.

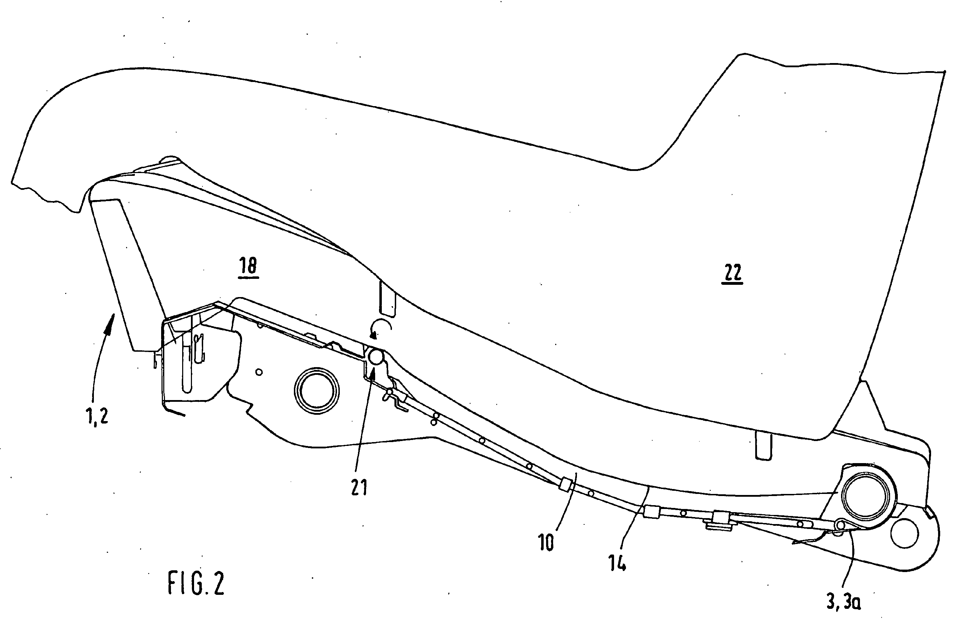

Die Fig. 2 zeigt einen Zustand des Sitzteiles 2, bei dem die obere, verstellbare Federschicht 14 so locker ist, dass bei der Benutzung durch eine Person 22 sowohl das untere Schaumteil 10 als auch das obere Schaumteil 18 eingedrückt wird. Dadurch ergibt sich eine weiche Einstellung der Sitzhärte.

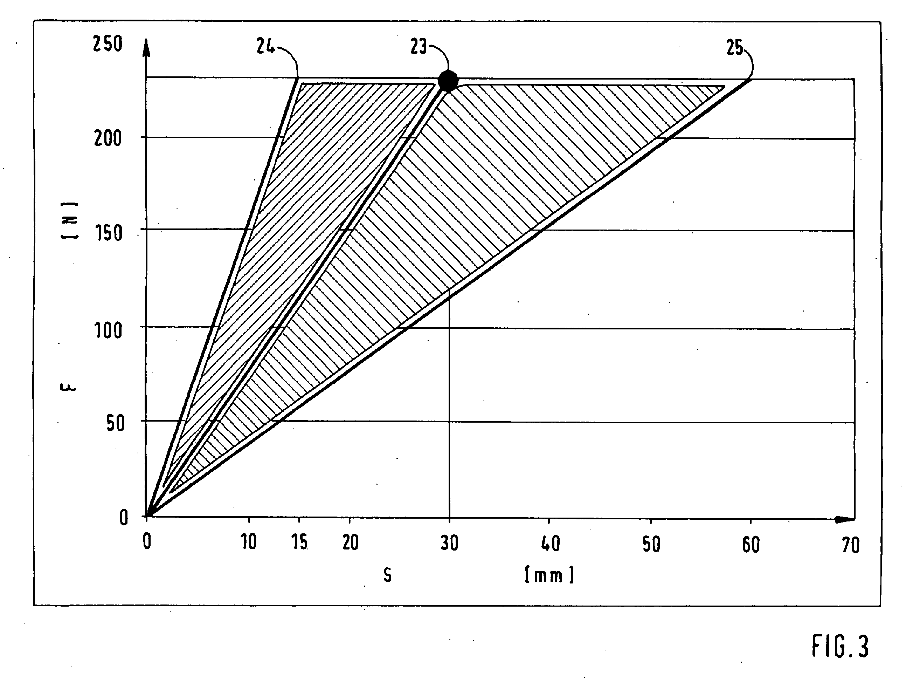

Die Fig. 3 zeigt ein Diagramm, bei dem über einen Eindruckweg s eine Eindruckkraft F aufgetragen ist. Ein Punkt 23 zeigt einen Zwischenwert einer üblichen Einstellung einer Eindruckhärte oder Sitzhärte des Sitzteils 2 bei einer Eindruckkraft F= 230 N und einem Eindruckweg s= 30 mm.

Durch Spannen der oberen, verstellbaren Federschicht 14 ist die Sitzhärte auf einen maximalen Wert einstellbar, der mit einem Punkt 24 bezeichnet ist. Bei dieser maximalen Sitzhärte beträgt die Eindruckkraft F wie beim Punkt 23 F= 230 N, während der Eindruckweg s bei s= 15 mm liegt. Am Punkt 24 steht lediglich das obere Schaumteil 18 als Feder zur Verfügung.

Eine weiche Einstellung der Sitzhärte ist am Punkt 25 möglich, bei dem der Eindruckweg s bei gleich bleibender Eindruckkraft F= 230 N bei s = 60 mm in der gezeigten Ausführungsform liegt. Am Punkt 25 wirkt der gesamte Sitzteil-Aufbau zusammen, d.h. die beiden Schaumteile 10, 18 und die beiden Federschichten 8, 14.

## Patentansprüche

1. Sitz für ein Fahrzeug mit einer Rückenlehne und mit einem Sitzteil (2), wobei das Sitzteil (2) ein Sitzgestell (3) aufweist, auf dem ein Polsterteil angeordnet ist, mit zwei übereinander angeordneten Federschichten (8, 14), wobei eine Federschicht (8) fest angeordnet ist und die andere Federschicht (14) in ihrer Spannung einstellbar ist, und wobei oberhalb der oberen Federschicht (14) ein oberes Schaumteil (18) ausgebildet ist
**dadurch gekennzeichnet, dass** eine untere Federschicht (8) an einem unteren Bereich (3a) des Sitzgestelles (3) unverstellbar am Sitzgestell (3) angeordnet ist, dass beabstandet zu der unteren Federschicht (8) eine obere, verstellbare Federschicht (14) vorgesehen ist, dass zwischen der unteren Federschicht (8) und der oberen Federschicht (14) ein weiteres unteres Schaumteil (10) angeordnet ist.

2. Sitz nach Anspruch 1,
**dadurch gekennzeichnet, dass** ein Ende (19) der oberen, verstellbaren Federschicht (14) an einem Querelement (5) oder einem Ende (7) des Sitzgestelles (3) befestigt ist und dass ein dazu gegenüberliegendes Ende (20) der oberen Federschicht (14) an einer drehbaren Welle (21) angeordnet ist.

3. Sitz nach den Ansprüchen 1 oder 2,
**dadurch gekennzeichnet, dass** die untere Federschicht (8) aus Formdraht besteht und dass die obere Federschicht (14) eine elastisch spannbare Gewebeschicht ist.

4. Sitz nach einem der vorhergehenden Ansprüche,
**dadurch gekennzeichnet, dass** das untere Schaumteil (10) eine höhere Härte als das obere Schaumteil (18) aufweist.

5. Sitz nach einem der vorhergehenden Ansprüche,
**dadurch gekennzeichnet, dass** die Schaumteile (10, 18) aus einem Schnittschaum und/oder einem Formschaum hergestellt sind.

6. Sitz nach einem der vorhergehenden Ansprüche,
**dadurch gekennzeichnet, dass** der Antrieb der Welle (21) manuell und/oder elektrisch und/oder pneumatisch und/oder hydraulisch erfolgt.

7. Sitz nach einem der vorhergehenden Ansprüche,
**dadurch gekennzeichnet, dass** zumindest der Querschnitt des unteren Schaumteils (10) in Höhe der höchsten Belastung bei der Benutzung eine dem Belastungsverlauf entsprechende Verdickung aufweist.

8. Sitz nach einem der vorhergehenden Ansprüche,
**dadurch gekennzeichnet, dass** die obere Federschicht (14) stufenlos einstellbar ist.

9. Sitz nach einem der vorhergehenden Ansprüche,
**dadurch gekennzeichnet, dass** bei einer maximalen Verspannung der oberen Federschicht (14) nur das obere Schaumteil (18) eine Belastung durch eine Person (22) oder dergleichen aufnimmt.

10. Sitz nach einem der vorhergehenden Ansprüche,
**dadurch gekennzeichnet, dass** bei einer minimalen Spannung der oberen Federschicht (14) das obere Schaumteil (10), das untere Schaumteil (18) und die untere Federschicht (8) vollständig zur Einstellung der Sitzhärte beitragen.

11. Sitz nach einem der vorhergehenden Ansprüche,
**dadurch gekennzeichnet, dass** über die obere Federschicht (14) unterschiedliche Sitzhärten des Sitzteiles (2) zwischen einer maximalen Härte (24) und einer minimalen Härte (25) einstellbar sind.

## Claims

1. A seat for a vehicle, comprising a back rest and a seat part (2), wherein the seat part (2) has a frame (3) on which an upholstery part is disposed and comprises two superposed spring layers (8, 14), wherein one spring layer (8) is fixed and the other spring layer (14) is adjustably tensioned, and wherein a top foam part (18) is disposed above the top spring layer (14),
**characterised in that** a bottom foam layer (8) on a bottom region (3a) of the seat part (3) is non-adjustably disposed on the frame (3), a top adjustable spring layer (14) is disposed at a distance from the bottom spring layer (8), and an additional bottom foam part (10) is disposed between the bottom spring layer (8) and the top spring layer (14).

2. A seat according to claim 1,
**characterised in that** an end (19) of the top adjustable spring layer (14) is fastened to a transverse element (5) or to an end (7) of the seat frame (3) and an opposite end (20) of the top spring layer (14) is disposed on a rotatable shaft (21).

3. A seat according to claim 1 or claim 2,
**characterised in that** the bottom spring layer (8) is of sectional wire and the top spring layer (14) is an elastically stretchable fabric layer.

4. A seat according to any of the preceding claims,
**characterised in that** the bottom foam part (10) is harder than the top foam part (18).

5. A seat according to any of the preceding claims,
**characterised in that** the foam parts (10, 18) are made from cut foam and/or moulded foam.

6. A seat according to any of the preceding claims,
**characterised in that** the drive of the shaft (21) is manual and/or electric and/or pneumatic and/or hydraulic.

7. A seat according to any of the preceding claims,
**characterised in that** at least the cross-section of the bottom foam part (10) has a thick part corresponding to the variation in load at the place where the load is heaviest during use.

8. A seat according to any of the preceding claims,
**characterised in that** the top spring layer (14) is steplessly adjustable.

9. A seat according to any of the preceding claims,
**characterised in that** when the top spring layer (14) is under maximum stress, only the top foam part (18) receives the load of a person (22) or the like.

10. A seat according to any of the preceding claims,
**characterised in that** when the spring layer (14) is under minimum stress, the top foam part (10), the bottom foam part (18) and the bottom spring layer (8) co-operate fully in the adjustment of the seat hardness.

11. A seat according to any of the preceding claims,
**characterised in that** via the top spring layer (14), the hardness of the seat part (2) can be adjusted between maximum hardness (14) and minimum hardness (25).

## Revendications

1. Siège pour un véhicule avec un dossier et une assise (2), dont l'assise (2) comprend un châssis de siège (3) portant une partie rembourrée, avec deux couches de ressort superposées (8, 14) dont une couche de ressort (8) est solidement attachée et l'autre couche de ressort (14) présente une tension réglable, et avec une pièce de mousse supérieure (18) disposée au dessus de la couche de ressort supérieure (14),
**caractérisé en ce qu'**
une couche de ressort inférieure (8) est disposée de façon non réglable sur le châssis de siège (3) à une zone inférieure (3a) du châssis de siège (3), une couche de ressort supérieure (14) est espacée de la couche de ressort inférieure (8), avec une autre pièce de mousse inférieure (10) disposée entre la couche de ressort inférieure (8) et la couche de ressort supérieure (14).

2. Siège selon la revendication 1,
**caractérisé en ce qu'**
une extrémité (19) de la couche de ressort supérieure réglable (14) est fixée à un élément transversal (5) ou à une extrémité (7) du châssis de siège (3), et une extrémité opposée (20) de la couche de ressort supérieure (14) est attachée à un arbre rotatif (21).

3. Siège selon les revendications 1 ou 2,
**caractérisé en ce que**
la couche de ressort inférieure (8) se compose de fil profilé, et la couche de ressort supérieure (14) est une couche de tissu pouvant être tendu élastiquement.

4. Siège selon l'une quelconque des revendications précédentes;
**caractérisé en ce que**
la pièce de mousse inférieure (10) présente une dureté plus élevée que la pièce de mousse supérieure (18).

5. Siège selon l'une quelconque des revendications précédentes,
**caractérisé en ce que**
les pièces de mousse (10, 18) sont fabriquées en une mousse découpée et/ou en une mousse moulée.

6. Siège selon l'une quelconque des revendications précédentes,
**caractérisé en ce que**
l'entraînement de l'arbre (21) est manuel et/ou électrique et/ou pneumatique et/ou hydraulique.

7. Siège selon l'une quelconque des revendications précédentes,
**caractérisé en ce qu'**
au moins la section transversale de la pièce de mousse inférieure (10) présente une surépaisseur correspondant à la courbe de charge à hauteur de la plus forte charge exercée lors de l'utilisation.

8. Siège selon l'une quelconque des revendications précédentes,
**caractérisé en ce que**
la couche de ressort supérieure (14) est réglable de manière progressive.

9. Siège selon l'une quelconque des revendications précédentes,
**caractérisé en ce que**
seule la pièce de mousse supérieure (18) supporte une charge exercée par une personne (22) ou analogue lorsque la couche de ressort supérieure (14) est tendue au maximum.

10. Siège selon l'une quelconque des revendications précédentes,
**caractérisé en ce que**
la pièce de mousse supérieure (10), la pièce de mousse inférieure (18) et la couche de ressort inférieure (8) contribuent pleinement au réglage de la dureté du siège lorsque la couche de ressort supérieure (14) est soumise à une tension minimale.

11. Siège selon l'une quelconque des revendications précédentes,
**caractérisé en ce que**
l'on peut régler différentes duretés de l'assise (2), entre une dureté maximale (24) et une dureté minimale (25), au moyen de la couche de ressort supérieure (14).
